# EUROPEAN PATENT SPECIFICATION

(11) **EP 2 373 766 B1**
(45) Date of publication and mention of the grant of the patent: **12.09.2018**
(21) Application number: 09771612.0
(22) Date of filing: 14.12.2009
(51) Int. Cl.: C10J 3/46, C10J 3/48, C10J 3/54, C10J 3/56

(54) **START-UP PROCEDURE FOR GASIFYING SOLID FUELS IN A CIRCULATING FLUIDIZED BED**
ANFAHRMETHODE ZUM VERGASEN VON FESTEN BRENNSTOFFEN IN EINER ZIRKULIERENDEN WIRBELSCHICHT
GAZÉIFICATION DE COMBUSTIBLES SOLIDES DANS UN LIT FLUIDISÉ ENTRAÎNÉ

(30) Priority: 15.12.2008 NL 2002330
(43) Date of publication of application: 12.10.2011
(73) Proprietor: RWE Generation NL B.V., 4931 NC Geertruidenberg (NL)
(72) Inventor: SPANJERS, Martijn Antonius Johan Cornelis Maria, 4931 NC Geertruidenberg (NL); WILLEBOER, Willem, 4931 NC Geertruidenberg (NL)
(74) Representative: V.O.
(86) International application number: PCT/NL2009/050764
(87) International publication number: WO 2010/071422

(56) References cited:
- EP-A- 0 383 565
- DE-C1- 4 035 293
- JP-A- 2003 021 314
- US-A- 5 624 470
- KUMAR A ET AL: "Steam-air fluidized bed gasification of distillers grains: Effects of steam to biomass ratio, equivalence ratio and gasification temperature" BIORESOURCE TECHNOLOGY, ELSEVIER BV, GB LNKD- DOI:10.1016/J.BIORTECH.2008.10.011, vol. 100, no. 6, 22 November 2008 (2008-11-22), pages 2062-2068, XP025799009 ISSN: 0960-8524 [retrieved on 2008-11-22]
- PAN Y G ET AL: "Fluidized-bed co-gasification of residual biomass/poor coal blends for fuel gas production" FUEL, IPC SCIENCE AND TECHNOLOGY PRESS, GUILDFORD, GB LNKD- DOI:10.1016/S0016-2361(99)00258-6, vol. 79, no. 11, 1 September 2000 (2000-09-01), pages 1317-1326, XP004286274 ISSN: 0016-2361
- BARBARA ELVERS ET AL: "Gas Production", INTERNET CITATION, 15 December 2006 (2006-12-15), XP002478106, Retrieved from the Internet: URL:http://mrw.interscience.wiley.com/emrw /9783527306732/ueic/article/a12_169/curren t/abstract [retrieved on 2008-04-22]

## Description

The invention relates to a method and apparatus for gasifying solid fuels in a circulating fluid bed. More particularly, the invention relates to a method and apparatus for gasifying wood, for example, demolition wood, for the purpose of energy generation in fuel-fired power stations.

Gasifying of poorly grindable fuels typically takes place in installations based on the principle of a circulating fluid bed. This process is relatively lenient in respect of variations in the composition and the heating value of the fuel. A known method of this kind is the subject of European patent document EP 0239589.

A gasifier used in such a method consists of a non-cooled steel vessel in which different layers of refractory lining are provided against the wall. In a reactor system, of which the gasifier is a part, a recycle cyclone for the solids is included, with which the bed material, which forms the fluid bed, is recycled via a recycle pipe and a 'gas seal' (e.g., a U-trap) into the gasifier. In this way, in the gasification system the circulation of bed material is maintained. As bed material, typically sand is used, which, despite the disadvantage of wear on the installation, has a good heat transfer and is inert with respect to the fuels to be.

US 5 624 470 A discloses a process for starting up a circulating fluidized bed gasifier for black liquor, where in the start-up phase an inert flue gas produced by an external burner is passed through the gasifier. The gas produced by the external burner during start-up is mixed with water, i.e. at the prevailing temperatures present as steam.

EP 0 383 565 also discloses a gasifier startup procedure using steam as the start-up gas. The reactor is a fluidized bed which has an enlarged upper diameter to allow backstreaming of the fluidized particles back to the bed. It therefore qualifies as a circulating bed gasifier.

DE 40 35 293 C1 describes a detailed start-up procedure of a gasifier detailing temperatures and start-up burner operation in relationship to measured temperatures inside the reactor. The reactor is heated with hot air until it reaches a temperature of 350° C at which point heating oil is added to increase the temperature to 600° C within the first 8 hours, at which point coal is added to increase the temperature to 950° C. Only then inertisation with nitrogen is effected.

Fuel and combustion air (or oxygen) are supplied in such a ratio that conversion of the fuel (from solid form into gaseous form) occurs, at temperatures between 700 and 950 °C. The gas thereby produced consists for a major part of the combustible components carbon monoxide, methane and hydrogen.

After the gas produced leaves the gasification reactor via the recycle cyclone mentioned, it is subjected, prior to the gas cleaning step(s), to cooling in a heat exchanger, where thermal energy is transferred to, e.g., a steam system. After this cooling, the gas can be wholly or partly cleaned by use of cyclones or filters, possibly followed by further-reaching cleaning steps such as, e.g., a water quench.

Starting this known gasification process is done through (prolonged) preheating of the gasification system with the aid of one or more oil- or gas-fired starter burners which are arranged in the gasifier itself or which are placed immediately next to it, with the hot flue gases being passed directly through the gasifier. In the course of the heat-up process, the gasifier is supplied with bed material, such as sand, which is thereupon caused to circulate by means of continuous air supply. Naturally, this material is then also heated up by the hot flue gases of the starter burner.

Experience has taught that the described method and apparatus have a number of drawbacks. Gasification installations based on the principle of a circulating fluid bed are designed for operating temperatures of up to about 1000 °C at a maximum. This means, for one thing, that also during heat-up (as part of the starting procedure) no higher temperatures may be used. For that reason, the oil- or gas-fired heat-up burner(s) must be operated with a large excess of air, because otherwise the flue gas temperatures would (far) exceed the design temperature of the installation. The air excess used during heat-up of the installation means that then the (flue) gases present in the gasifier contain a fair to considerable percentage of oxygen.

Upon gasification of solid fuel in a circulating fluid bed, *inter alia* fly ash is formed, which is entrained with the gas produced. A portion of this fly ash settles in the installation portions through which the gas flows, especially in the gas cooler and the piping. This fly ash, especially with fuels having a low content of inert substances, contains a substantial proportion of carbon. This means that in the whole installation downstream of the gasifier, there is a (locally even considerable) deposit of fine, combustible powder. When a gasifier that has been in operation before and whose gas cooler and piping are hence polluted with (combustible) fly ash, is started again, hot, oxygen-containing flue gases are passed through those installation parts. As soon as the temperature at the location of the fly ash deposits exceeds the ignition temperature of the fly ash, these deposits will ignite, resulting in an (internal) fire where unallowably high temperatures may occur. Practice has shown that this phenomenon is inevitable and that in such a situation it is virtually impossible for the occurring temperatures to be so controlled as to remain within the allowable limits. Then there is no alternative but to stop the starter burner and to extinguish the fire by flushing the installation with nitrogen. After this, it may be attempted again to further heat up the installation (which has cooled down considerably again as a result of flushing), until the residual fly ash ignites again and the temperatures become uncontrollable. It goes without saying that this trial-and-error starting method is highly undesirable on account of aspects of safety and of integrity of the installation. Also, the energy waste involved is unacceptable. Upon restart of a still warm installation, the fly ash may actually ignite already during the necessary flushing (with air), prior to starting of the burner, i.e., even before the burner is ignited.

In addition to the phenomenon that the fly ash present in the installation ignites during heat-up, there is also the danger that an explosive mixture is formed in the .installation upon the passage of oxygen-containing (flue) gases. This is because the fly ash is very fine and is very well ignitable, so that when during heat-up somehow dust clouds arise in the installation, an explosive mixture of oxygen-containing gas and fly ash is readily formed. From a safety viewpoint this is obviously unallowable (unless the presence of a source of ignition can be positively and definitively precluded).

In conventional process operation, starting gasification after heating up of the installation is done by beginning with combustion of the fuel with a good excess of air in connection with maximum allowable temperatures (1000 °C). The flue gases then contain a considerable percentage of oxygen, due to which the fly ash deposits present in the installation (can) combust. Thereupon, by raising the fuel supply or lowering air supply, operation proceeds to gasification. This is accompanied by high temperatures that can be controlled only, and to a limited extent, by cooling, for example by means of water injection. Moreover, there is a transition from oxygen-rich flue gases to oxygen-free and CO-rich flue gases; if this occurs rapidly, explosive dust clouds may arise in "dead corners" of the installation.

It has also been established that at high temperatures during start-up or gasification, agglomerations of the bed material can form in the apparatus.

Accordingly, it is an object of the present invention to eliminate or ameliorate at least one of the disadvantages of the state of the art. It is also an object of the present invention to provide alternative solutions which can be more simply implemented and which may possibly be put into practice comparatively advantageously. Alternatively, it is an object of the invention to provide an at the least useful option.

To this end, the invention provides a method for gasifying solid fuels in a gasifier with a circulating fluid bed according to claim 1. In particular, it is then of advantage when the heat-up burner is operated in a stable combustion region of the fuels. More particularly, the heat-up burner can then be operated with natural gas, which is burned sub-stoichiometrically at all times. In a gasification process carried out in this way, as flushing medium, for flushing the gasifier prior to igniting a heat-up burner, with advantage an inert atmosphere is used, which is formed by steam.

According to a particular feature of the invention, as heat-up burner, an external heat-up burner is used. With such an external heat-up burner, the process parameters are still better controllable.

According to yet another feature of the method according to the invention, as cooling medium for control of (flue) gas temperature, steam is used. It is then an important advantage that an inert atmosphere is created with steam, possibly supplemented with nitrogen. In view of the costs and the being at hand in fuel-fired power stations, steam is an economically highly attractive alternative.

The method according to the invention may further be favorably operated if the supply of oxygen proceeds throughout the loading region and under all conditions in a controlled manner and, if necessary, can be wholly interrupted.

Also, the method according to the invention is advantageously operable if conditions prevailing in the gasifier are monitored and are communicated with a control algorithm. In particular, an oxygen proportion in the gasifier can then be measured and be communicated with the control algorithm. Primarily, the establishment of the presence of oxygen for reasons of safety is then already sufficient. More particularly, also an internal temperature in the gasifier can then be measured and be communicated with the control algorithm.

At starting up of the gasification a heat-up burner is used and it is then checked whether the internal temperature of the gasifier has a value below a first temperature selected in the range of 100 to 120 °C. For fluidization and circulation of the fluid bed, when the internal temperature of the gasifier is below the first temperature, air is used. When the internal temperature of the gasifier is above the first temperature but below a second temperature selected as a safe lower limit for the combustion temperature of fly ash, one of the gases air and steam is used. If the internal temperature of the gasifier exceeds a second temperature selected as a safe lower limit for the combustion temperature of fly ash, then, as long as during heat-up no gasification is taking place yet, exclusively steam is used for fluidization and circulation of the fluid bed.

As an example not according to the invention the following also provides an apparatus for gasifying solid fuels with a circulating fluid bed for creating and maintaining a continuous gasification of those solid fuels with supply of oxygen, in the form of air, wherein the apparatus is provided with a supply pipe for steam, for fluidization and circulation of the fluid bed. With advantage, such an apparatus may be provided with a heat-up burner for starting up the gasification. The heat-up burner is then provided with a sub-stoichiometric oxygen supply. Also, the following describes a system that is provided with such an apparatus and a processing unit, which is arranged for carrying out the method. In particular, the processing unit may be provided with a computer, such as a standard computer of the PC type.

To meet the drawbacks of the state of the art, the invention thus provides a method, whereby, in use, by principle, conditions are prevented from arising in the installation at any time in which fly ash deposits could ignite or in which explosive fly ash clouds could arise in the installation. This is achieved in that, by principle and without exception, oxygen-free conditions are used as soon as the temperature in the installation exceeds a defined limit value, which is - at a safe distance - below the temperature at which fly ash can combust. To achieve this, during starting (heat-up) chiefly steam is used as an inert atmosphere (instead of air) for the necessary flushing of the installation before igniting the heat-up or starter burner. Steam can then be used also for fluidization of the fluid bed and for cooling and/or temperature control of the flue gases of the starter burner instead of an air excess. Further, this starter burner is operated sub-stoichiometrically to prevent the flue gases themselves still containing any oxygen. The just-described heat-up method can only be used if the installation is still (or already) at a temperature above about 110 °C. When starting with a completely cooled installation, the first part of the heat-up (to > 100 °C) is done with excess air and without steam. This is because the steam would condense in the cold installation. As the installation is then still low in temperature - in any case far below the ignition temperature of the fly ash - during that first part of the heat-up range, oxygen can still be allowed in the installation.

Once the installation is at an operating temperature necessary for gasification conditions, a direct start is made with gasification of the fuel in the desired fuel/air ratio. In gasification operation, along with the starter burner, also the supply of cooling steam (temperature control) is stopped and the fluidization steam is replaced with air, which then serves also as gasification medium. In this way, during the normal gasification operation, from a viewpoint of process technology, the same situation as in the conventional method is maintained.

The method according to the invention also utilizes a new automated control program. Starting and stopping the installation now comprises all steps in which the transitions between air and steam fluidization and cooling/temperature control are driven, and in addition the program steps for flushing the installation with air, or with steam or nitrogen, depending on the condition (especially the temperature) of the installation.

The process-technical protection of the installation is thus rendered much simpler than that for the existing method. In the existing method, it must be possible for the installation to be in operation, and hence also to be protected, both under oxygenous conditions and under oxygen-free conditions. In the former case, it needs to be monitored that no CO is present, in the latter case there is monitoring for O₂. The presence of different monitoring criteria and the necessary switch between them are highly undesirable. In the newly developed oxygen-free gasification method, only one uniform protection regime applies, requiring protection (as to gas composition) exclusively for O₂. Also, the limit values are uniform and depend exclusively on the temperature of the installation.

The following also describes an apparatus, in which steam pipes and tie-ins are arranged in the air supply. Through this arrangement, the steam in the gasifier is used in the primary air supply as fluidization medium, in the secondary air supply as flushing medium and in the air supply of the heat-up burner as cooling medium for temperature control of the flue gases.

Further, the apparatus is provided with a control program which:
(i) depending on the temperature in the installation, chooses whether air can or may be used or that steam, or possibly nitrogen, must be used.
(ii) if starting was done with air (hence O₂ in the flue gases), provides, during heat-up, before the ignition temperature of the fly ash deposits is reached, for smooth switching from air to steam and hence oxygen-free operation.
(iii) if starting must be done at increased installation temperature, the installation must be operated in an oxygen-free manner uninterruptedly from the beginning of the start. Then flushing is done with steam, or possibly nitrogen, and the heat-up burner starts sub-stoichiometrically.
(iv) always gasifies with a fixed fuel-air ratio.

The most important results of oxygen-free operation are:
(1) Uniform, simple protection philosophy, depending solely on the temperature in the installation.
(2) No combustion of fly ash deposits in the installation, hence no uncontrolled, high temperatures in the installation either.
(3) No risky operating situations/gas mixtures possible in the installation.
(4) Uniform start-up method/start-up sequence, proceeding without interruptions resulting from combustion of fly ash deposits.
(5) Good temperature control in/of the installation.
(6) Starting of the heat-up burner under oxygen-free conditions, after flushing with steam, is possible sub-stoichiometrically (hence without oxygen ending up in the installation at any time).
(7) Always the same gasification conditions (same fuel/air ratio).
(8) The gasifier loading at a start is raised from a very low initial value.
(9) The integrity of the installation is very greatly improved in that temperature excursions (upon ignition of fly ash deposits) and frequent - cold - flushing of the installation (upon trips) are prevented.

The invention will now be elucidated in detail on the basis of an exemplary embodiment as shown in the accompanying drawings, in which:
Figure 1 is a schematic representation of a gasification installation according to the invention;
Figure 2 is a diagram showing the temperature in relation to the air-fuel ratio; and
Figure 3 is a flow diagram of the steps traversed by the control system.

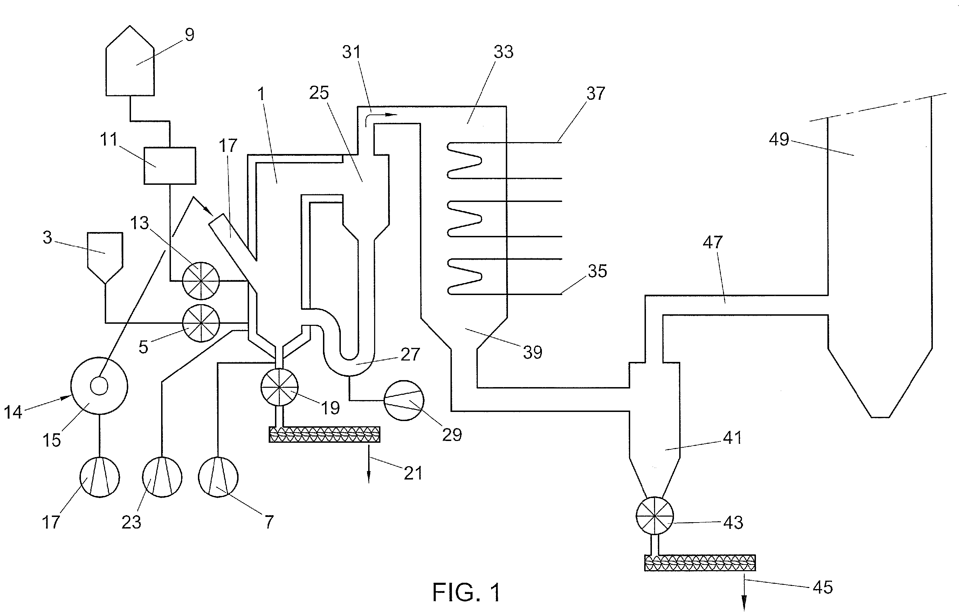

In Fig. 1 the gasification reactor is indicated with the reference numeral 1. The gasification reactor 1 has a feed of bed material 3, which is capable of supplying sand for a fluidized bed via a first sluice 5 to the gasification reactor. Sand is a suitable material for forming a fluidized bed in a gasification installation because it retains heat well and can distribute it. It has the disadvantage, though, of causing wear on the installation in the course of time. The gasification reactor 1, however, is formed by a steel vessel within which different layers of refractory have been applied against the wall and thereon wear caused by sand can be kept within acceptable limits. Further, the gasification reactor 1 is provided with a first supply of a first fluidization medium 7, with which, possibly with the aid of a compressor, an oxidizing or relatively inert gas, such as air, or steam (or possibly nitrogen), respectively, can be supplied. Also, there is a supply of solid fuel, such as a silo 9, in which wood chips in a particular size range are included. This silo 9 is connected via an optional screening installation 11 and a second sluice 13 to the gasification reactor 1. Possibly, the first sluice 5 may also be used, in combination, for the supply of solid fuel, which renders the second sluice 13 redundant. A supply of fuel for an external heat-up burner 14 is formed by a natural gas supply 15. The outlet of the external heat-up burner 14 is connected directly with the gasifier 1. For the supply of combustion air to the heat-up burner 14, a separate compressor 17 may be arranged, but possibly this can also be combined with a supply of fluidization medium to the reactor. Via a third sluice 19, the lower end of the gasification reactor 1 is connected to a discharge for bottom ash 21. In the lower end of the gasification reactor 1 there is further a second supply 23 of fluidization medium, or gasification medium, which in turn can be used at will for air or steam. The fluidized bed in the gasification reactor 1 is circulated via a recycle cyclone 25 for the bed material. Thereupon the bed material returns via a recycle pipe 27 with a 'gas seal' (such as a U-trap) to the lower end of the gasification reactor 1. The recycle pipe 27 is provided with a third supply 29 for fluidizing gas, such as, again, air or steam, or a mixture thereof. In the cyclone 25 a separation takes place of the gas produced and the solid materials, such as the bed material and ash residues. The gaseous product consists mainly of CO, H₂, CH₄ and may additionally contain *inter alia* C₂H₆ and NH₃ and is discharged in the direction of arrow 31 to a heat exchanger 33 with which the gas is cooled. The gas that leaves the recycle cyclone 25 can have a temperature of 850 °C. The heat exchanger 33 is provided with a supply 35 for feed water and a discharge 37 for steam integrated into the steam system of a power station. The gas that leaves the lower end 39 of the heat exchanger 33 has been cooled down to a temperature between 450 °C and 510 °C. This gas is thereupon supplied to a gas cleaning cyclone 41 where via a fourth sluice 43 fly ash is discharged through fly ash discharge 45. The thus cleaned and cooled wood gas, which still has a temperature of 450-510 °C, can then be supplied via the connecting pipe 47 to, for example, a steam boiler 49 of a power station.

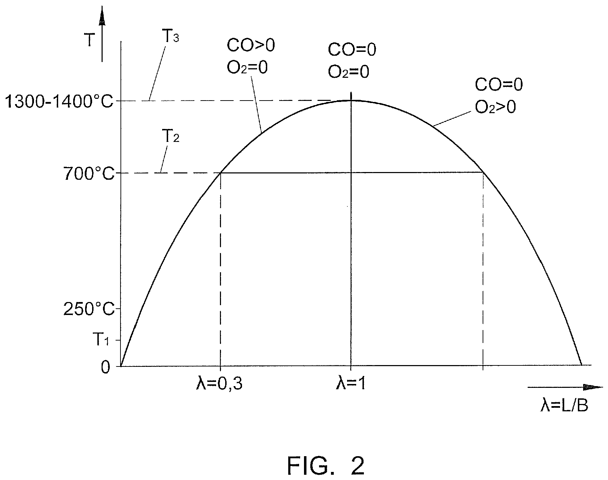

In Fig. 2 there is shown the course of the temperature such as it may occur in a gasification reactor, depending on the amounts of oxidizing gas and fuel. In principle, in a gasification, fuel and oxygen (air) are supplied in such a ratio that an incomplete conversion takes place at a temperature above 700 °C (T₂ in the example of Fig. 2), in a range between 700 and 950 °C, for example 850 °C. The gas thereby obtained consists substantially of the combustible components CO (carbon monoxide), CH₄ (methane) and H₂ (hydrogen). To set this process going, a prolonged preheating of the system is necessary. During this heat-up phase, the temperature course shown in Fig. 2 can occur. Unallowable are the temperatures that can occur at a stoichiometric air to fuel ratio (λ = 1). These temperatures are in the order of 1300-1600 °C, for example, 1300-1400 °C (T₃ in the example of Fig. 2), more particularly in the range of 1500-1600 °C, whereas the gasification installations normally only allow operating temperatures up to about 1000 °C. Moreover, this can lead to agglomeration of the bed material. Such high gas temperatures must therefore be avoided at all times, also upon going out of operation. The choice and supply of the fluidization medium and the sub-stoichiometric supply of oxidizing agent ensure in the invention that the temperature in the gasifier remains below 1000 °C in all process phases.

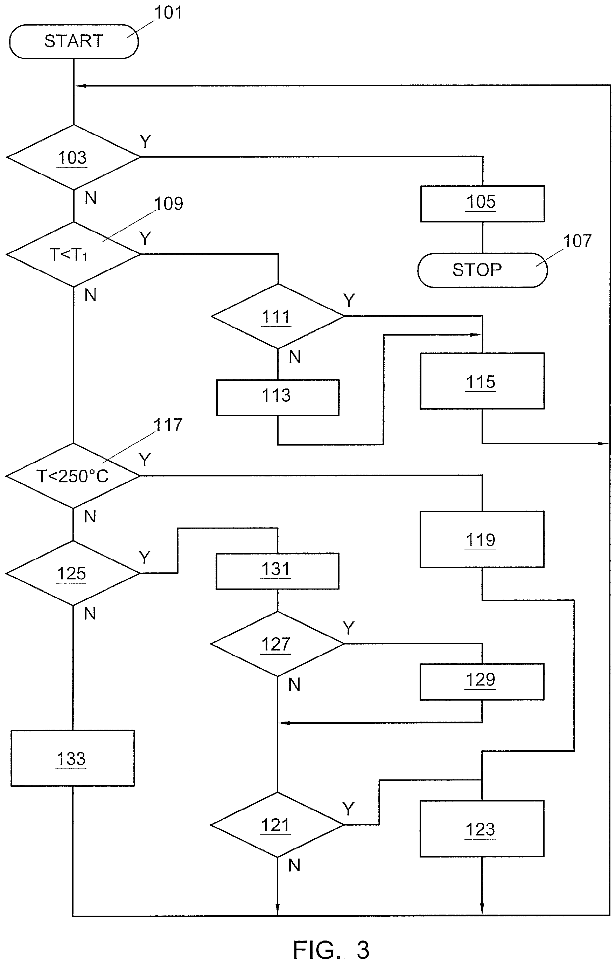

The control dedicated to this is designed according to the flow diagram of Fig. 3. The process starts at step 101. In a next step 103 it is established whether a command for shutting down the installation has been received. If this is the case, the shut-down routine will be activated in step 105, which eventually results in a shut-down installation in step 107. If in step 103 no command to stop the installation is established, the process continues with step 109. In step 109 it is established whether the operating temperature T (according to Fig. 2) is still below a first limit value T₁ of 100 to 120 °C. If this is the case, step 111 checks whether the heat-up burner has already been activated. When the heat-up burner has not been activated yet, the heat-up burner is started in step 113. When the heat-up burner is active, the process continues with step 115 by which air is chosen as fluidization medium. When the process passes step 109 and the operating temperature T is not lower than T₁ anymore, the process is continued with step 117. Step 117 checks whether the operating temperature T (see Fig. 2) is still below a second limit value of about 250 °C. If this is still the case, the process is continued with a subroutine 119, by which it is established whether the fluidization medium, as far as this is still formed by air, is to be replaced with steam. When this is the case, the process proceeds with step 123, in which the proportion of oxidizing gas (in practice typically air) in the fluidization medium is reduced, and is replaced with steam or possibly N₂. When the operating temperature T has reached the second limit value of 250 °C, it is verified in step 125 whether the gasification conditions have been achieved. If step 125 has determined that the gasification conditions have been achieved, when a third limit value of 700 °C has been reached, the process is continued with step 131 which sets a predetermined value for the air to fuel ratio (for example, λ=0.3 in Fig. 2). The process continues with step 127 in which it is checked whether the heat-up burner is still active. The heat-up burner, if necessary, is switched off via step 129. After this, the process continues with step 121, to monitor that there is no oxygen (O₂) in the flue gases. As soon as oxygen is established in the flue gases, the supply of air in the fluidization medium is immediately stopped by step 123. The gasification or heat-up process is thereby stopped. In the case where step 125 finds that the gasification conditions have not been achieved yet, step 133 ensures that exclusively steam is used as fluidization medium. As can be seen in Fig. 3, the steps 103, 109, 117, 121, 125 and 127 run on continuously in gasification operation. Interruptions or deviations in the gasification operation are immediately detected and warded off with appropriate measures.

The same limit values apply also to cooling down, during stopping of the gasification process.

It is believed that the construction and operation of the present invention are clearly apparent from the foregoing.

## Claims

1. A method for gasifying solid fuels in a gasifier with a circulating fluidized bed, wherein in the gasifier conditions are created and maintained for a continuous gasification of these solid fuels with controlled supply of oxygen, wherein at starting up of the gasification, a heat-up burner is used, while it is checked whether the internal temperature of the gasifier has a value below a first temperature selected in the range of 100 to 120 °C, wherein for fluidization and circulation of the fluidized bed, when the internal temperature of the gasifier is below the first temperature, air is used, wherein when the internal temperature of the gasifier is above the first temperature, but below a second temperature selected as a safe lower limit for the combustion temperature of fly ash having a limit value of 250 °C, one of the gases air and steam is used, and wherein an inert atmosphere of excvlusively steam is used for fluidization and circulation of the fluidized bed, when the internal temperature of the gasifier is above the second temperature and below a third limit value of an operating temperature necessary for gasification conditions of 700 °C.

2. A method according to claim 1, wherein the heat-up burner is operated in a combustion region of the fuels that is stable.

3. A method according to claim 2, wherein the heat-up burner is operated with natural gas.

4. A method according to claim 3, wherein the natural gas is burned sub-stoichiometrically at all times.

5. A method according to any one of the preceding claims, wherein as flushing medium, for flushing the gasifier prior to igniting the heat-up burner, steam is used.

6. A method according to any one of the preceding claims, wherein as cooling medium for control of flue gas temperature steam is used.

7. A method according to any one of the preceding claims, wherein as cooling medium for control of flue gas temperature besides steam also nitrogen is used.

8. A method according to any one of the preceding claims, wherein conditions prevailing in the gasifier are monitored and are communicated with a control algorithm.

9. A method according to claim 8, wherein an oxygen proportion in the gasifier is measured and is communicated with the control algorithm.

10. A method according to claim 8 or 9, wherein an internal temperature in the gasifier is measured and is communicated with the control algorithm.

## Patentansprüche

1. Verfahren zum Vergasen von festen Brennstoffen in einem Vergaser mit einem zirkulierenden Fließbett, wobei in dem Vergaserbedingungen geschaffen und aufrechterhalten werden für eine kontinuierliche Vergasung dieser festen Brennstoffe mit kontrollierter Zufuhr von Sauerstoff, wobei beim Anlaufen der Vergasung ein Aufwärmbrenner verwendet wird, während geprüft wird, ob die Innentemperatur des Vergasers einen Wert unter einer ersten Temperatur, ausgewählt im Bereich von 100 bis 120°C, hat, wobei zur Verflüssigung und Zirkulation des Fließbetts, wenn die Innentemperatur des Vergasers unter der ersten Temperatur ist, Luft verwendet wird, wobei, wenn die Innentemperatur des Vergasers über der ersten Temperatur ist aber unter einer zweiten Temperatur, ausgewählt als eine sichere untere Grenze für die Verbrennungstemperatur von Flugasche mit einem Grenzwert von 250°C, eines der Gase Luft und Dampf verwendet wird, und wobei eine inerte Atmosphäre von ausschließlich Dampf verwendet wird zur Verflüssigung und Zirkulation des Fließbetts, wenn die Innentemperatur des Vergasers über der zweiten Temperatur und unter einem dritten Grenzwert einer für Vergasungsbedingungen von 700°C erforderlichen Betriebstemperatur ist.

2. Verfahren nach Anspruch 1, wobei der Aufwärmbrenner in einem Verbrennungsbereich der Brennstoffe, der stabil ist, betrieben wird.

3. Verfahren nach Anspruch 2, wobei der Aufwärmbrenner mit Erdgas betrieben wird.

4. Verfahren nach Anspruch 3, wobei das Erdgas immer substöchiometrisch verbrannt wird.

5. Verfahren nach einem der vorhergehenden Ansprüche, wobei als Spülmedium zum Spülen des Vergasers vor dem Entzünden des Aufwärmbrenners Dampf verwendet wird.

6. Verfahren nach einem der vorhergehenden Ansprüche, wobei als Kühlmedium zum Steuern von Rauchgastemperatur Dampf verwendet wird.

7. Verfahren nach einem der vorhergehenden Ansprüche, wobei als Kühlmedium zum Steuern von Rauchgastemperatur außer Dampf auch Stickstoff verwendet wird.

8. Verfahren nach einem der vorhergehenden Ansprüche, wobei in dem Vergaser vorherrschende Bedingungen mit einem Steueralgorithmus überwacht und kommuniziert werden.

9. Verfahren nach Anspruch 8, wobei ein Sauerstoffanteil in dem Vergaser mit dem Steueralgorithmus gemessen und kommuniziert wird.

10. Verfahren nach Anspruch 8 oder 9, wobei eine Innentemperatur in dem Vergaser mit dem Steueralgorithmus gemessen und kommuniziert wird.

## Revendications

1. Procédé pour gazéifier des combustibles solides dans un gazogène avec un lit fluidisé circulant, dans lequel dans le gazogène, des conditions sont créées et maintenues pour une gazéification continue de ces combustibles solides avec une alimentation contrôlée en oxygène, dans lequel au début de la gazéification, on utilise un brûleur de réchauffage, alors que l'on vérifie si la température interne du gazogène a une valeur inférieure à une première température sélectionnée dans la plage de 100 à 120 °C, dans lequel pour la fluidisation et la circulation du lit fluidisé, lorsque la température interne du gazogène est inférieure à la première température, l'air est utilisé, dans lequel lorsque la température interne du gazogène est supérieure à la première température, mais inférieure à une seconde température sélectionnée comme étant une limite inférieure de sécurité pour la température de combustion des cendres volatiles ayant une valeur de limite de 250 °C, l'un parmi l'air des gaz et la vapeur est utilisé, et dans lequel une atmosphère inerte exclusivement de vapeur est utilisée pour la fluidisation et la circulation du lit fluidisé, lorsque la température interne du gazogène est supérieure à la seconde température et inférieure à une troisième valeur de limite d'une température de fonctionnement nécessaire pour des conditions de gazéification de 700 °C.

2. Procédé selon la revendication 1, dans lequel le brûleur de réchauffage est actionné dans une région de combustion des combustibles qui est stable.

3. Procédé selon la revendication 2, dans lequel le brûleur de réchauffage est actionné avec du gaz naturel.

4. Procédé selon la revendication 3, dans lequel le gaz naturel est brûlé par voie sous-stoechiométrique à tout moment.

5. Procédé selon l'une quelconque des revendications précédentes, dans lequel en tant que milieu de rinçage, pour rincer le gazogène avant l'allumage du brûleur de réchauffage, on utilise la vapeur.

6. Procédé selon l'une quelconque des revendications précédentes, dans lequel en tant que milieu de refroidissement pour contrôler la température de gaz d'évacuation, on utilise de la vapeur.

7. Procédé selon l'une quelconque des revendications précédentes, dans lequel en tant que milieu de refroidissement pour contrôler la température de gaz d'évacuation outre la vapeur, on utilise également de l'azote.

8. Procédé selon l'une quelconque des revendications précédentes, dans lequel les conditions prédominantes dans le gazogène sont surveillées et sont communiquées avec un algorithme de contrôle.

9. Procédé selon la revendication 8, dans lequel une proportion d'oxygène dans le gazogène est mesurée et communique avec l'algorithme de contrôle.

10. Procédé selon la revendication 8 ou 9, dans lequel une température interne dans le gazogène est mesurée et communique avec l'algorithme de contrôle.
